# EUROPÄISCHE PATENTSCHRIFT

(11) **EP 2 534 402 B1**
(45) Veröffentlichungstag und Bekanntmachung des Hinweises auf die Patenterteilung: **18.01.2017**
(21) Anmeldenummer: 10728574.4
(22) Anmeldetag: 01.06.2010
(51) Int. Cl.: F16L 33/207, F16L 13/14

(54) **VORRICHTUNG ZUM ANSCHLUSS EINES KUNSTSTOFFROHRES AN EINEM ANSCHLUSSNIPPEL**
DEVICE FOR CONNECTING A PLASTIC TUBE TO A CONNECTION NIPPLE
DISPOSITIF POUR RACCORDER UN TUBE DE PLASTIQUE À UN ÉLÉMENT DE RACCORD

(30) Priorität: 10.02.2010 AT 1802010
(43) Veröffentlichungstag der Anmeldung: 19.12.2012
(73) Patentinhaber: KE KELIT Kunststoffwerk Gesellschaft m.b.H., 4020 Linz (AT)
(72) Erfinder: RATSCHMANN, Elmar, A-4020 Linz (AT)
(74) Vertreter: Patentanwaltskanzlei Hübscher
(86) Internationale Anmeldenummer: PCT/AT2010/000191
(87) Internationale Veröffentlichungsnummer: WO 2011/097658

(56) Entgegenhaltungen:
- EP-A1- 2 154 411

## Beschreibung

### Technisches Gebiet

Die Erfindung bezieht sich auf eine Vorrichtung zum Anschluss eines Kunststoffrohres an einem Anschlussnippel, wobei das mit einer stirnseitigen Anfasung im Bereich des Innendurchmessers versehene Anschlussende des Kunststoffrohres unter Zwischenlage wenigstens eines im profilierten Anschlussnippel gehaltenen Dichtungsringes zwischen dem Anschlussnippel und einer Klemmhülse axial festgehalten ist.

### Stand der Technik

Um mit einem Druckmedium beaufschlagte Kunststoffrohre, beispielsweise Rohr für Wasserleitungen im Bereich von Hausinstallationen, abzugsicher an einem Anschlussnippel einer Armatur zu befestigen, ist es bekannt, das auf den mit einer Profilierung versehenen Anschlussnippel aufgeschobene Kunststoffrohr zwischen dem Anschlussnippel und einer das Kunststoffrohr umschließenden Klemmhülse festzuklemmen. Die Abdichtung zwischen dem Anschlussnippel und dem Kunststoffrohr wird dabei durch wenigstens einen in eine umlaufende Ausnehmung des Anschlussnippels eingesetzten Dichtungsring sichergestellt, über den das Kunststoffrohr auf den Anschlussnippel aufgeschoben werden muss. Zu diesem Zweck ist das Anschlussende des Kunststoffrohres im Bereich seines Innendurchmessers stirnseitig mit einer Anfasung versehen, die den Dichtungsring beim Aufschieben des Kunststoffrohres auf den Anschlussnippel unter einer elastischen Verformung in die Ausnehmung eindrückt. Fehlt eine solche Anfasung oder ist sie unzureichend, so besteht die Gefahr, dass der an die Stirnfläche des Kunststoffrohres anschlagende Dichtungsring beim Aufschieben des Kunststoffrohres auf den Anschlussnippel aus der Ausnehmung gezwängt und entlang des Anschlussnippels verschoben wird, was wiederum die notwendige Abdichtung zwischen Anschlussnippel und Kunststoffrohr gefährdet, ohne dass diese Gefährdung erkannt wird, weil ja die Klemmhülse, zwischen der und dem Anschlussnippel das Kunststoffrohr eingeführt wird, den Dichtungsring abdeckt.

### Darstellung der Erfindung

Der Erfindung liegt somit die Aufgabe zugrunde, eine alternative Vorrichtung zum Anschluss eines Kunststoffrohres an einem Anschlussnippel der eingangs geschilderten Art so auszugestalten, dass eine unzulässige Verlagerung des Dichtungsringes bzw. eine Beschädigung des Dichtungsringes beim Anschließen des Kunststoffrohres am Anschlussnippel unterbunden wird.

Die Erfindung löst die gestellte Aufgabe dadurch, dass der Anschlussnippel wenigstens einen radial auswärts vorstehenden, mittels der stirnseitigen Anfasung im Bereich des Innendurchmessers des Anschlussendes radial nach innen verlagerbaren Anschlag aufweist, wobei der Anschlag in Einsteckrichtung gesehen vor dem Dichtungsring angeordnet ist, welche Anschläge von den freien Enden von gegen die Aufschieberichtung des Kunststoffrohres vorragenden radial federnden Federansätzen gebildet sind.

Wird zufolge dieser Maßnahme versucht, ein nicht oder nur unzureichend angefastes Anschlussende eines Kunststoffrohres auf den Anschlussnippel aufzuschieben, so bildet der Anschlag aufgrund seiner entsprechend gewählten Abmessungen mit der dem Anschlussende des Kunststoffrohres zugekehrten Stirnfläche wenigstens eine Anschlagfläche, die das Aufschieben des Kunststoffrohres auf den Anschlussnippel hemmt. Bei einem ordnungsgemäß angefasten Kunststoffrohr stellt jedoch die Anfasung eine Anlauffläche für den Anschlag dar, der beim Aufschieben des Kunststoffrohres auf den Anschlussnippel radial auf den Innendurchmesser des Kunststoffrohres zusammengedrückt wird und den Weg für das Aufschieben des Kunststoffrohres in die Anschlussstellung freigibt. Gegebenenfalls sind mehrere Anschläge über den Anschlussnippelumfang verteilt vorgesehen.

Nach einer vorteilhaften, gegebenenfalls auch nachrüstbaren Ausführungsform der Erfindung weist der Anschlussnippel in der Anschlussstellung des Kunststoffrohres auf der der Stirnseite des Anschlussendes gegenüberliegenden Seite des Dichtungsringes eine Aufnahme für einen Sicherungsring auf, von dem gegen die Aufschieberichtung des Kunststoffrohres die Anschläge aufweisende Federansätze vorragen, die radial federnd ausgebildet sind, wobei die freien Enden der Federansätze im ausgefederten Zustand einen Abstand zur Anschlussnippelachse aufweisen der größer ist als der Innenradius des Kunststoffrohres, aber kleiner ist als der Außenradius der Anfasung des Anschlussendes des Kunststoffrohres.

Der mit den erfindungsgemäßen Federelementen ausgestattete Sicherungsring verhindert somit ebenfalls den Anschluss eines für einen solchen Anschluss ungenügend vorbereiteten Kunststoffrohres und somit Beschädigungen bzw. ungewünschte Verlagerungen des wenigstens einen Dichtringes. Die Federansätze spannen dabei im Wesentlichen einen Trichter auf, bilden also Trichtersegmente, der sich zum aufschubseitigen Ende des Anschlussnippels hin erweitert.

Um eine Beschädigung des Sicherungsringes durch unsachgemäße Handhabung der Vorrichtung, insbesondere durch ein Aufschieben nicht angefaster Rohre mit übermäßiger Kraft zu vermeiden, empfiehlt es sich, wenn vom Anschlussnippel bzw. vom Sicherungsring wenigstens drei, vorzugsweise über den Sicherungsringumfang gleichverteilt angeordnete, Federansätze zumindest annähernd koaxial zur Ring- bzw. Anschlussnippelachse abragen.

Damit der Sicherungsring gut am Anschlussnippel sitzt können zwischen den die Anschläge bildenden Federansätzen zylindersegmentförmige Führungsansätze vom Sicherungsring abragen, die in axialer Richtung gegebenenfalls über die Federansätze vorragen. Der Sicherungsring ist dabei beispielsweise mittels Presspassung auf den Anschlussnippel aufgeschoben, in eine Nut im Anschlussnippel eingesetzt bzw. mit dem Anschlussnippel verklebt, verschweißt oder in anderer Weise fest verbunden. Im einfachsten Fall bilden Anschlussnippel und Anschläge ein aus einem Material gefertigtes Bauteil.

### Kurze Beschreibung der Zeichnung

In der Zeichnung ist der Erfindungsgegenstand beispielsweise dargestellt. Es zeigen
- Fig. 1: eine erfindungsgemäße Vorrichtung zum Anschließen eines Kunststoffrohres an einem Anschlussnippel mit einem ordnungsgemäß auf den Anschlussnippel aufgeschobenen Kunststoffrohr in einem vereinfachten Axialschnitt,
- Fig. 2: die Vorrichtung nach der Fig. 1 mit einer Zwischenstellung des Kunststoffrohres während des Aufschiebens,
- Fig. 3: eine der Fig. 2 entsprechende Darstellung mit einem nicht angefasten Kunststoffrohr,
- Fig. 4: eine Konstruktionsvariante eines Sicherungsringes in vergrößerter Schrägansicht und
- Fig. 5: eine Konstruktionsvariante der Vorrichtung aus Fig. 3.

### Weg zur Ausführung der Erfindung

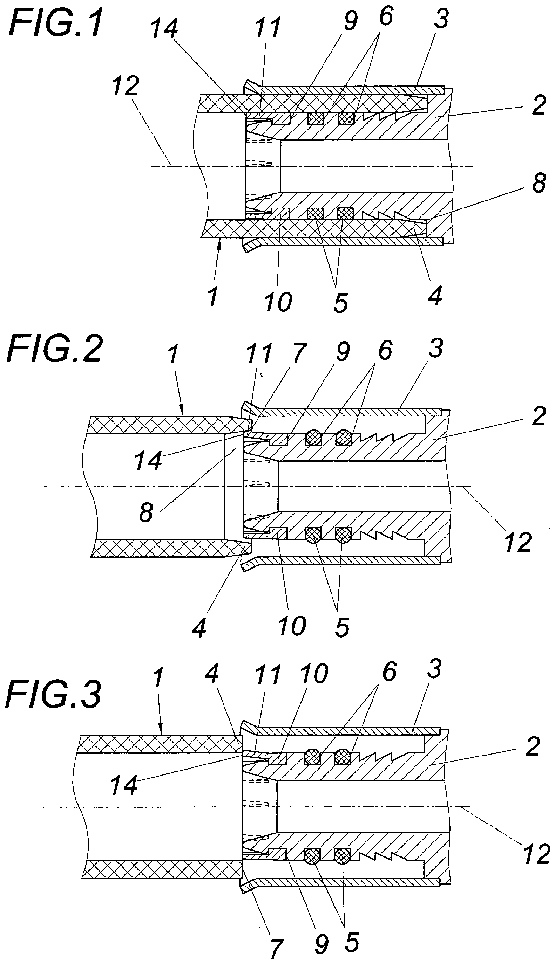

Die dargestellte Vorrichtung zum Anschluss eines Kunststoffrohres 1 an einem Anschlussnippel 2 einer nicht näher dargestellten Armatur weist eine Klemmhülse 3 auf, zwischen der und dem Anschlussnippel 2 das Anschlussende 4 des Kunststoffrohres 1 einzuführen ist, um anschließend über die Klemmhülse 3 am profilierten Anschlussnippel 2, beispielsweise durch das Einprägen von Umfangssicken, festgeklemmt zu werden. Die Abdichtung zwischen dem Anschlussnippel 2 und dem Anschlussende 4 des Kunststoffrohres 1 erfolgt mit Hilfe zweier Dichtungsringe 5, die in umlaufende Nuten 6 des Anschlussnippels 2 eingesetzt sind. Damit die im unbelasteten Zustand über den Außenumfang des Anschlussnippels 2 vorstehenden Dichtungsringe 5 nicht beim Einschieben des Endabschnittes 4 des Kunststoffrohres 1 in den Ringspalt zwischen dem Anschlussnippel 2 und der Klemmhülse 3 aus den Nuten 6 gezwängt werden können, ist die Stirnseite 7 des Anschlussendes 4 des Kunststoffrohres 1 mit einer Anfasung 8 versehen, wie dies den Fig. 1 und 2 entnommen werden kann.

Damit verhindert wird, dass ein nicht bzw. nur unzureichend angefastes Kunststoffrohr 1 über den Dichtungsring 5 hinweg auf den Anschlussnippel 2 in die vorgegebene Anschlussstellung aufgeschoben werden kann, weist der Anschlussnippel 2 wenigstens einen radial auswärts vorstehenden, mittels der stirnseitigen Anfasung 8 im Bereich des Innendurchmessers des Anschlussendes 4 radial nach innen verlagerbaren Anschlag 14 auf, wobei der Anschlag 14 in Einsteckrichtung gesehen vordem Dichtungsring 5 angeordnet ist.

Gemäß den Fig. 1 bis 3 ist auf der in der Anschlussstellung des Kunststoffrohres 1 (Fig. 1) der Stirnseite 7 des Anschlussendes 4 gegenüberliegenden Seite der Dichtungsringe 5 ein in eine Aufnahme 9 des Anschlussnippels 2 eingesetzter Sicherungsring 10 vorgesehen. Von dem Sicherungsring 10 ragen gegen die Aufschieberichtung des Kunststoffrohres 1 Federansätze 11 vor, die radial federnd ausgebildet sind, wobei die freien Enden der Federansätze 11 die Anschläge 14 ausbilden, die im ausgefederten Zustand einen äußeren Abstand zur Anschlussnippelachse 12 aufweisen der größer ist als der Innenradius des Kunststoffrohres 1, aber kleiner ist als der Außenradius der Anfasung 8 des Anschlussendes 4 des Kunststoffrohres 1.

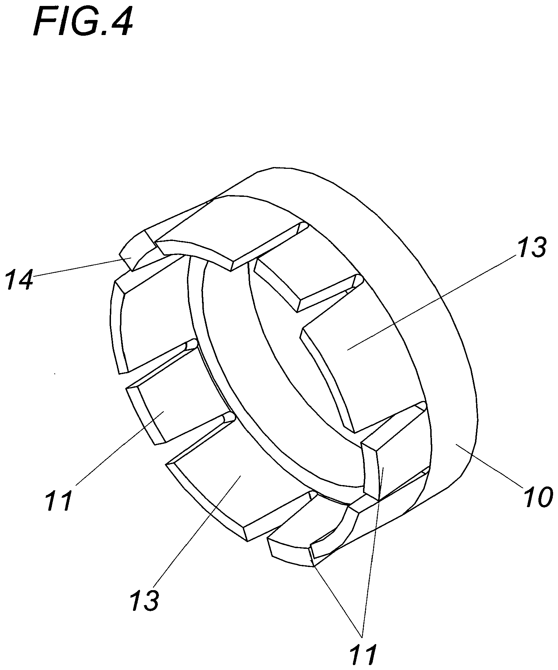

Vom in Fig. 4 dargestellten Sicherungsring 10 ragen fünf, über den Sicherungsringumfang gleichverteilt angeordnete, Federansätze 11, zumindest annähernd koaxial zur Ring- bzw. Anschlussnippelachse 12, ab. Zwischen den Federansätzen 11 ragen zylindersegmentförmige Führungsansätze 13 vom Sicherungsring 10 abragen, die in axialer Richtung über die Federansätze 11 vorragen können.

Wird demnach gemäß der Fig. 2 ein ordnungsgemäß angefastes Kunststoffrohr 1 auf den Anschlussnippel 2 aufgeschoben, so bildet die Anfasung 8 des Anschlussendes 4 eine Anlauffläche für die Anschläge 14 der Federansätze 11, die entlang dieser Anlauffläche radial einfedern und den Weg zu den Dichtungsringen 5 freigeben, über den hinweg das Anschlussende 4 des Kunststoffrohres 1 in die Anschlussstellung nach der Fig. 1 aufgeschoben werden kann. Weist jedoch das Anschlussende 4 des Kunststoffrohres 1 keine oder eine unzureichende Anfasung 8 auf, so schlägt die Stirnseite 7 des Anschlussendes 4 des Kunststoffrohres 1 an die der Stirnseite 7 zugekehrten Stirnflächen der Federansätze 11, die Anschläge 14, mit dem Ergebnis an, dass das Anschlussende 4 des Kunststoffohres 1 nicht mehr weiter in den Ringspalt zwischen Anschlussnippel 2 und Klemmhülse 3 eingeschoben werden kann (Fig. 3). Aufgrund des erkennbar nicht vollständigen Aufschiebens des Kunststoffrohres 1 auf den Anschlussnippel 2 muss das Kunststoffrohr 1 vor dem Anschließen wieder vom Anschlussnippel 2 abgezogen und entsprechend angefast werden, bevor der Anschluss vorgenommen werden kann.

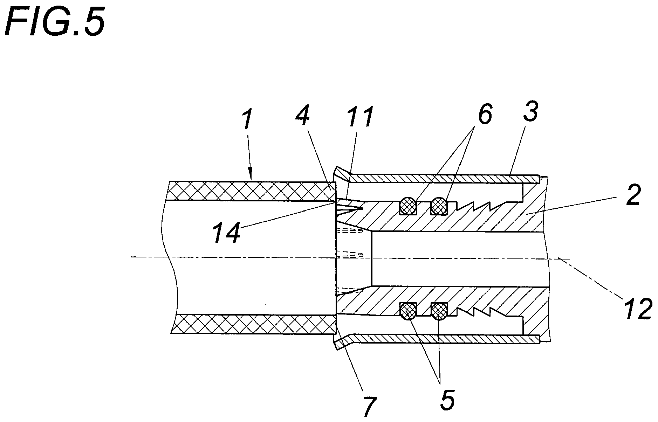

Im einfachsten Fall bilden die Anschlussnippel 2, die Federansätze 11 und die Anschläge 14 ein aus einem Material gefertigtes Bauteil (Fig. 5). Die axiale Lage der Anschläge 14 am Anschlußnippel ist von einem Fachmann frei wählbar, solange die Anschläge 14 in Einsteckrichtung gesehen vor dem Dichtungsring 5 angeordnet sind.

## Patentansprüche

1. Vorrichtung zum Anschluss eines Kunststoffrohres (1) an einem Anschlussnippel (2), wobei das mit einer stirnseitigen Anfasung (8) wenigstens im Bereich des Innendurchmessers versehene Anschlussende (4) eines Kunststoffrohrs (1) unter Zwischenlage wenigstens einer in einem profilierten Anschlussnippel (2) gehaltenen Dichtungsringes (5) zwischen dem Anschlussnippel (2) und einer Klemmhülse (3) axial festgehalten ist, wobei der Anschlussnippel (2) wenigstens einen radial auswärts vorstehenden, mittels der stirnseitigen Anfasung (8) im Bereich des Innendurchmessers des Anschlussendes (4) radial nach innen verlagerbaren Anschlag (14) aufweist, wobei der Anschlag (14) in Einsteckrichtung gesehen vor dem Dichtungsring (5) angeordnet ist, **dadurch gekennzeichnet, dass** die Anschläge (14) von den freien Enden von gegen die Aufschieberichtung des Kunststoffrohres (1) vorragenden radial federnden Federansätzen (11) gebildet sind.

2. Vorrichtung nach Anspruch 1, **dadurch gekennzeichnet, dass** der Anschlussnippel (2) in der Anschlussstellung des Kunststoffrohres (1) auf der der Stirnseite (7) des Anschlussendes (4) gegenüberliegenden Seite des Dichtungsringes (5) eine Aufnahme (9) für einen Sicherungsring (10) aufweist, mit einem Sicherungsring, von dem die Federansätze (11) vorragen, wobei die freien Enden der Federansätze (11) im ausgefederten Zustand einen Abstand zur Anschlussnippelachse (12) aufweisen der größer ist als der Innenradius des Kunststoffrohres (1), aber kleiner ist als der Außenradius der Anfasung (8) des Anschlussendes (4) des Kunststoffrohres (1).

3. Vorrichtung nach einem der Ansprüche 1 oder 2, **dadurch gekennzeichnet, dass** vom Anschlussnippel (2) bzw. vom Sicherungsring (10) wenigstens drei, vorzugsweise über den Sicherungsringumfang gleichverteilt angeordnete, Federansätze (11) zumindest annähernd koaxial von der Ring- bzw. Anschlussnippelachse (12) abragen.

4. Vorrichtung nach einem der Ansprüche 1 bis 3, **dadurch gekennzeichnet, dass** zwischen den die Anschläge (14) bildenden Federansätzen (11) zylindersegmentförmige Führungsansätze (13) vom Sicherungsring (10) abragen, die in axialer Richtung gegebenenfalls über die Federansätze (11) vorragen.

## Claims

1. Device for connecting a plastic tube (1) to a connection nipple (2), wherein the connection end (4), provided with an end-side chamfer (8) at least in the region of the inner diameter, of a plastic tube (1) is axially retained between the connection nipple (2) and a clamping sleeve (3) with the interposition of at least one sealing ring (5) held in a profiled connection nipple (2), wherein the connection nipple (2) comprises at least one radially outwardly protruding stop (14) which can be displaced radially inwardly by means of the end-side chamfer (8) in the region of the inner diameter of the connection end (4), wherein the stop (14) is arranged in front of the sealing ring (5) as seen in the insertion direction, **characterised in that** the stops (14) are formed by the free ends of radially resilient spring lugs (11) which protrude counter to the slideon direction of the plastic tube (1).

2. Device as claimed in claim 1, **characterised in that** the connection nipple (2), in the connection position of the plastic tube (1), comprises a receptacle (9) for a securing ring (10) on the side of the sealing ring (5) opposite the end face (7) of the connection end (4), having a securing ring from which the spring lugs (11) protrude, wherein the free ends of the spring lugs (11), in the extended state, are at a spaced disposition with respect to the connection nipple axis (12) which is greater than the inner radius of the plastic tube (1) but smaller than the outer radius of the chamfer (8) of the connection end (4) of the plastic tube (1).

3. Device as claimed in any one of claims 1 or 2, **characterised in that** at least three spring lugs (11), preferably arranged evenly distributed over the periphery of the securing ring, protrude from the connection nipple (2) or from the securing ring (10) at least approximately coaxially from the ring or connection nipple axis (12).

4. Device as claimed in any one of claims 1 to 3, **characterised in that** between the spring lugs (11) forming the stops (14), guide lugs (13) in the form of cylinder segments protrude from the securing ring (10) and possibly protrude beyond the spring lugs (11) in the axial direction.

## Revendications

1. Dispositif pour raccorder un tube de plastique (1) à un élément de raccord (2), l'extrémité de raccord (4) d'un tube de plastique (1), dotée d'une partie frontale biseautée (8) au moins dans la zone du diamètre intérieur, étant maintenue axialement entre l'élément de raccord (2) et un manchon de serrage (3) avec intercalage au moins d'une bague d'étanchéité (5) maintenue dans un élément de raccord (2) profilé, l'élément de raccord (2) présentant au moins une butée (14) qui dépasse radialement vers l'extérieur et peut se déplacer radialement vers l'intérieur au moyen de la partie frontale biseautée (8) dans la zone du diamètre intérieur de l'extrémité de raccord (4), la butée (14) étant disposée en amont de la bague d'étanchéité (5) dans la direction d'insertion, **caractérisé en ce que** les butées (14) sont formées des extrémités libres de prolongements ressorts (11), élastiques, radialement en saillie inversement à la direction d'insertion du tube de plastique (1).

2. Dispositif selon la revendication 1, **caractérisé en ce que** l'élément de raccord (2) présente dans la position de raccordement du tube de plastique (1) sur le côté, opposé au côté face (7) de l'extrémité de raccordement (4), de la bague d'étanchéité (5), un logement (9) pour une bague de protection (10), avec une bague de protection d'où les prolongements ressorts (11) dépassent, les extrémités libres des prolongements ressorts (11) présentant, dans l'état détendu, un espacement par rapport à l'axe de l'élément de raccord (12) qui est plus grand que le rayon intérieur du tube de plastique (1), mais plus petit que le rayon extérieur de la partie biseautée (8) de l'extrémité de raccord (4) du tube de plastique (1).

3. Dispositif selon l'une des revendications 1 ou 2, **caractérisé en ce qu'**au moins trois prolongements ressorts (11) disposés répartis de manière régulière de préférence sur la périphérie de la bague de protection, dépassent de l'élément de raccord (2) ou de la bague de protection (10), au moins à peu près de façon coaxiale de l'axe de l'élément de raccord (12) ou de la bague.

4. Dispositif selon l'une des revendications 1 à 3, **caractérisé en ce qu'**entre les prolongements ressorts (11) formant les butées (14), des prolongements de guidage (13) en forme de segment de cylindre dépassent de la bague de protection (10), qui font saillie, dans la direction axiale, le cas échéant, au-dessus des prolongements ressorts (11).
